# EUROPEAN PATENT SPECIFICATION

(11) **EP 1 600 053 B1**
(45) Date of publication and mention of the grant of the patent: **14.02.2007**
(21) Application number: 04076573.7
(22) Date of filing: 27.05.2004
(51) Int. Cl.: A01G 5/00, B65G 47/00, B07C 5/342

(54) **Method and system for sorting a series of plants**
Verfahren und Vorrichtung zum Sortieren mehrerer Pflanzen
Procédé et dispositif pour trier une serie de plantes

(43) Date of publication of application: 30.11.2005
(73) Proprietor: W/M Systems B.V., 2587 TX Den Haag (NL)
(72) Inventor: De Jager, Maarten, 2587 TX Den Haag (NL); Brugman, Thomas Gerardus, 2715 AN Zoetermeer (NL)
(74) Representative: van Westenbrugge, Andries

(56) References cited:
- EP-A- 0 449 386
- EP-A- 1 396 449
- DE-A- 19 920 920
- DE-A- 19 929 985
- NL-A- 9 402 028
- NL-C- 1 002 445

## Description

The present invention relates to a method for sorting a series of plants arranged on a carrier. Sorting must be understood in the broadest terms here. For example, the separation of plants into varieties that have to be subjected to a separate treatment, such as pruning, spraying, harvesting and the like.

Such plants are frequently cultivated on carriers such as roller tables or roller troughs, so that these can be moved easily, it being possible to transport the plants to a treatment system that is in a fixed location in the greenhouse. Such plants can be pot plants, but also plants cultivated in a substrate or in trays. A wide variety of variants are known in the state of the art.

When sorting, the problem arises that the plants from the carrier that has been fed are distributed over carriers that are to be moved away. The number of carriers to be moved away is greater than the number of carriers that have been fed, as a result of which a large number of carriers is required, which, moreover, takes up a great deal of room. With this arrangement, in the state of the art, when pot plants are used these are placed in buffers by sliding them. This sliding must be carried out relatively rapidly (in less than 1 sec) and gives rise to problems in the case of large, high, heavy and/or vulnerable plants. Moreover, problems arise if the part of the plant that drapes over the pot extends to below the support surface of the pot. Finally, damage is observed in the case of pots provided with individual connections for supplying water.

The aim of the invention is to avoid these disadvantages.

This aim is realised with a method for sorting series of plants arranged on a carrier, in that this method comprises placing said carrier in a first position, in this first position transferring the complete series of plants from said carrier to a first intermediate storage, determining at least one characteristic of said plants, transferring a first portion of said series of plants that has said first characteristic to a second intermediate storage, holding the remaining portion of said series of plants that does not have said characteristic in said first intermediate storage, moving said carrier into a second position and transferring a series of plants exclusively from said first or said second storage to said carrier in said second position.

According to the present invention all plants are moved from the carrier into a first intermediate storage. The relevant characteristic, on the basis of which sorting is carried out, is determined in some way or other for each plant, in said first intermediate storage or beforehand. A number of plants that, for example, have a first characteristic are placed in a second intermediate storage. The other plants remain in the first intermediate storage. If sorting is carried out on the basis of three characteristics, there can be a third intermediate storage, and so on. After this sorting has taken place and the first, second or further intermediate storage has been filled again with a series of plants, an operation on the intermediate storage concerned to transfer the series concerned to the carrier that is now empty takes place. That is to say, the original carrier, in which there are various sorts, is used, after an optional cleaning step, to receive one of the sorts. Because ultimately the number of plants supplied is the same as the number removed, in principle there will never be a shortage of carriers, whilst it is also not necessary to provide a storage of carriers.

In order to obtain a series of plants with the desired spacing and a desired bulk in an intermediate storage, it is proposed according to a first variant of the invention always to arrange a buffer downstream of each intermediate storage. In this buffer the plants of the sort concerned can be positioned in an optimum manner to give a series and such a series of a specific sort can be transferred from this buffer to the carrier concerned. Although it is possible according to the invention to determine the relevant characteristic thereof at any point in time up to the time when the plants are transferred from the first intermediate storage to the second intermediate storage and further, according to an advantageous embodiment of the invention provision is made that the complete series of plants is first transferred from the carrier in the first transfer station to a preliminary storage. The complete series is then transported to the first intermediate storage and during this transport it is determined with the aid of a camera or another system whether the plant has a specific characteristic. The plants can optionally be placed further apart from each other during this transport in order, on the one hand, to facilitate grasping during transfer and, on the other hand, to be able to observe the characteristics of the plants concerned well. After passing by a camera or the like, both the position of the plant concerned and the characteristic thereof are storaged in some way or other, so that it is possible later on to transfer the plants from the first intermediate storage to the second or third intermediate storage.

As described above, the sorting operation can be applied to any type of plant. Cut flowers that are harvested from plants that have a cycle of sprouting, growing and blooming that recurs many times are mentioned as an example. If such plants are cultivated on carriers such as roller tables or roller troughs it is possible regularly to observe the development thereof using the method described above, so that plants that are in the same growth stage can always be placed in series with the same climate regime. Moreover, ultimately this has the effect that all plants to be harvested are with one another, as a result of which harvesting by the personnel concerned can be optimised. The present invention provides a facility for providing such sorting. Using the present invention, completely filled carriers can be removed efficiently.

By transferring series of plants, the treatment time can be appreciably shortened compared with constructions where plants are moved one by one, whilst nevertheless more time can be taken for the actual transfer, so that the plant can be handled more carefully.

If the plant is lifted when transferring, part of the plant draping over the pot to below the level of the base thereof does not have an adverse effect. Moreover, it has been found that damage to constructions for supplying water to the individual pots can be limited or even precluded.

The invention also relates to a system for sorting a series of plants according to at least one characteristic, comprising a movable carrier for said plants, a first transfer station for moving said series of plants simultaneously to a first intermediate storage with a first transfer robot, a second intermediate storage at said first transfer station for supporting a selection of said plants, and a second transfer robot at a second transfer station, adjoining the first transfer station, wherein said second transfer station comprises a first buffer and a second buffer, wherein there are displacement means for moving plants from said first intermediate storage to said first buffer and for moving plants from said second intermediate storage to said second buffer, wherein said second transfer station has a second transfer robot for moving a series of plants from a buffer to a carrier, wherein said transfer robots are designed for moving said plants vertically and wherein the plant can be moved directly from the carrier into the intermediate storage with the aid of the first transfer station. The characteristic of the plant that is important and on the basis of which the selection takes place can be determined in or before the first transfer station using a camera or other device. However, it is also possible to use an auxiliary transfer station, the plants being transported from the first carrier to an auxiliary storage with an auxiliary transfer robot. The characteristic of the plant that is important and on the basis of which sorting takes place can then be determined using a camera or other device during transport from the auxiliary storage to the intermediate storage.

Various types of transfer robots can be provided for carrying out the action concerned, depending on the way in which the plants are presented. According to a particular embodiment of the invention where the plants are pot plants, the transfer robot consists of a horizontal arm that for the purposes of manipulation can be joined to the robot frame by a construction in any manner known in the state of the art, that is to say a construction for moving upwards and downwards and for moving sideways. A series of grippers, which, depending on the application, can all be operated simultaneously or individually, can be mounted on this arm. In the case of the series of grippers that operate between the first and second intermediate storage, there is individual operation, whilst in the case of the other transfer robots in principle common operation of all grippers can suffice. The arms of the grippers are designed to grasp the plant pot concerned as well as possible. According to an advantageous embodiment, the grippers each consist of two gripper arms that can be brought closer together or further apart by tilting.

A series can comprise any number of plants. A number of approximately forty plants is mentioned as an example.

The invention will be explained in more detail below with reference to illustrative embodiments shown in the drawing. In the drawing:
Fig. 1 shows, diagrammatically, a pot plant on a carrier, which pot plant is part of a series;
Fig. 2 shows a transfer robot;
Fig. 3 shows a detail of the gripper of the transfer robot;
Fig. 4 shows, diagrammatically, the movement of the plants in the system according to the invention and
Fig. 5 shows, diagrammatically, a further variant of the movement of the plants according to the invention.

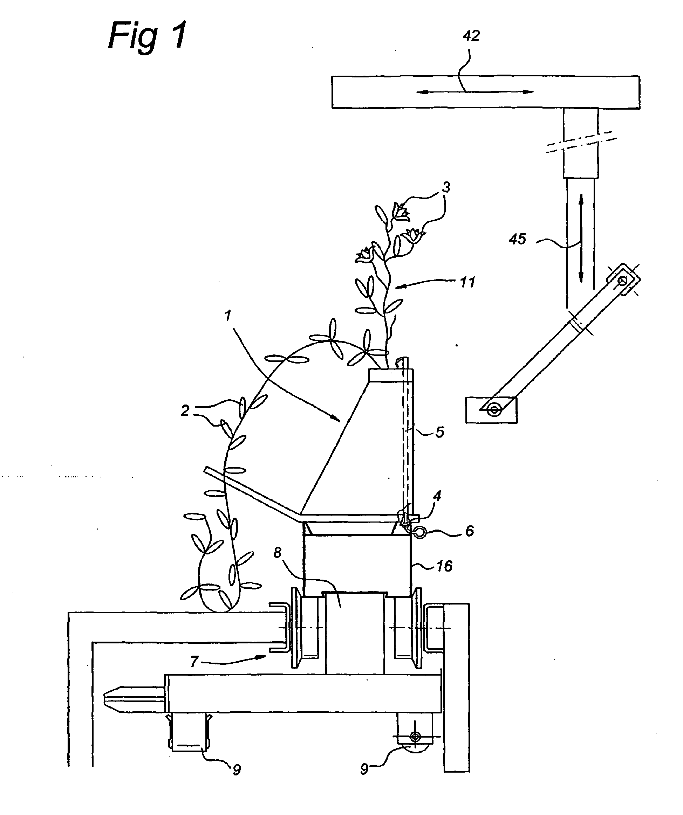

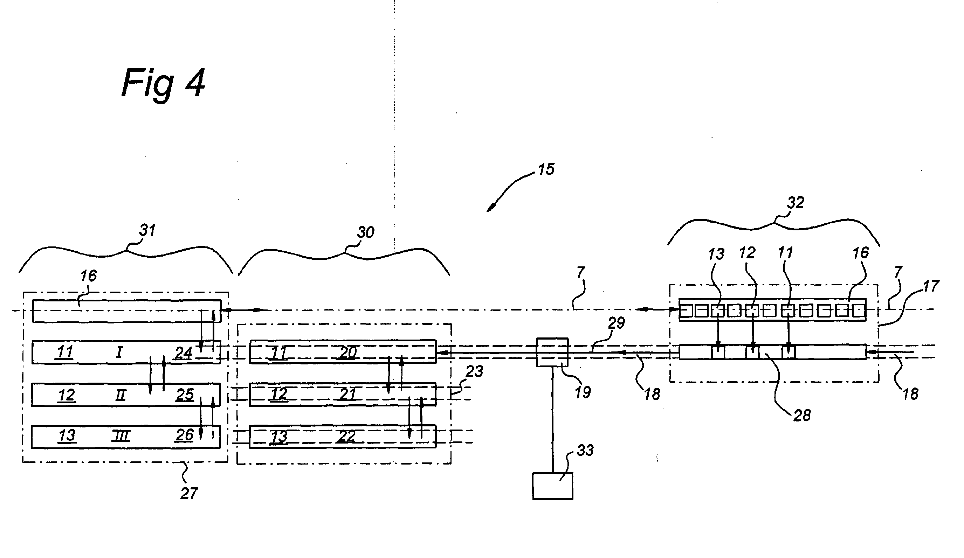

In Fig. 1 a pot is indicated by 1. A number of such pots are placed one after the other on a carrier, constructed as a roller trough 16 here. In principle, the same plants are in the various pots 1, but these plants are in a different stage of development. A distinction is made between three stages and the relevant plants are indicated by 11, 12 and 13 (see also Fig. 4). In the illustrative embodiment in question a rose is shown, the green part being indicated by 2 and the cut flower to be cultivated by 3. Pot 1 has a particular shape which enables an optimum manner of cultivation.

On one side the pot is provided with a seat 4, connected to a line 5. There is a water dispensing line 6 in the trough. The seat 4 is of funnel-shaped construction and when the pot 1 is correctly vertically positioned with respect to the dispensing line 6, dispensing line 6 connects to line 5 in a sealed manner, as a result of which the plant that is in the pot 1 can be irrigated. It will be understood that the positioning of seat 4 with respect to trough 16 is important. Trough 16 is moved over a trough roller conveyor 7. In the greenhouse the trough bears on tubular rails via frame 8 and wheels 9.

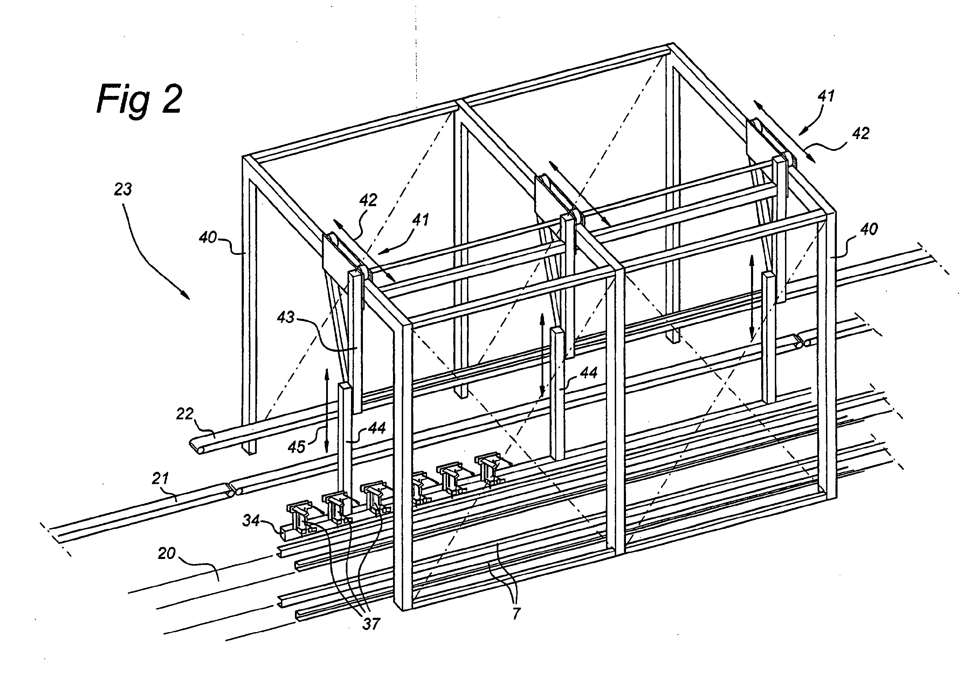

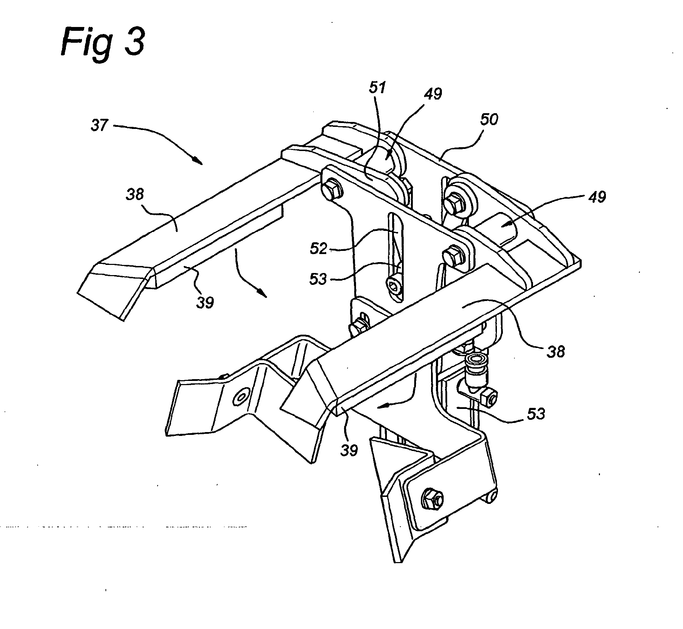

According to the embodiment shown here, use is made of three transfer robots in the invention. These are indicated by 17, 23 and 27 and the mode of operation thereof will be explained in more detail with reference to Fig. 2. The first transfer robot 23 consists of a frame 40, over which a carriage 41 can be moved back and forth in the direction of arrow 42. The carriage is provided with arms 43 and auxiliary arms 44. Auxiliary arms 44 can move up and down in the vertical direction with respect to arms 43 according to arrow 45. As a result, the horizontal arm 34 can be moved up and down in accordance with arrow 45 and back and forth in accordance with arrow 42. A series of grippers 37 are mounted on arm 34. Details of such grippers can be seen from Fig. 3. Each gripper 37 consists of two gripper arms 38. These are each provided with a covering 39 for grasping pots 1 using friction. Each arm is mounted in a support 50 at 49 such that it can pivot. The other end of each gripper arm 38 is indicated by 51 and connected to rod 52. The two rods are coupled to one another and connected to an actuator, such as a pneumatic cylinder 53. By operation of the latter the arms 38 can be tilted as is indicated by arrows to grasp a pot. The first transfer robot 23 is so designed that each of the grippers can be operated individually.

In Fig. 4 the system according to the present invention is indicated in its entirety by 15. This consists of a first transfer station 30 with first transfer robot 23 and a second transfer station 31 with transfer robot 27 and an auxiliary transfer station 32 with auxiliary transfer robot 17. A belt conveyor that consists of a first or auxiliary storage section 28 and a second or transport section 29 is indicated by 18.

An evaluation system, such as a camera system, arranged in the second or transport section 29 is indicated by 19. 20 is a first intermediate storage, 21 a second intermediate storage, 22 a third intermediate storage. The first transfer robot 23 operates between the first intermediate storage 20 and the second or third intermediate storage 21 or 22, respectively. There is a first buffer 24 in the extension of the first intermediate storage 20, a second buffer 25 in the extension of the second intermediate storage 21 and a third buffer 26 in the extension of the third intermediate storage 22. The carrier 16 has been drawn in a second position in transfer station 31. The second transfer robot 27 operates between one of the first - third buffers 24 - 26 and the carrier 16 positioned in second transfer station 31.

The system described above functions as follows:

When a carrier 16 arrives in the auxiliary transfer station 32, the complete series of plants, such as the pots 1 containing varieties 11, 12 and 13, is placed on the first section or the preliminary storage 28 of belt conveyor 18 with the aid of the auxiliary transfer robot 17. This auxiliary transfer robot corresponds to what has been shown in Fig. 2. All pot plants are transferred at the same time using grippers 37. After optionally positioning the plants further apart from each other at the transition from the auxiliary storage 28 to the transport section 29 of the belt conveyor 18, these are guided past an evaluation system, such as a camera system 19. In this system the characteristics of the plant are determined, for example the length, whether or not there are certain outgrowths, and the like. The position of the pot and the relevant characteristic are storaged in controller 33. All plants are then placed in the first intermediate storage 20. During this operation these can optionally be positioned closer together again.

Those plants 12 and 13 in the first intermediate storage 20 that meet the criteria for placing in the second intermediate storage 21, or in the third intermediate storage 22, are then grasped with the first transfer robot 23. The plants are then placed in the relevant intermediate storage. After carrying out this operation, there is an irregular distance between the plants in the first - third intermediate storage 20 - 22. By moving the belts in these intermediate storages, the plants are moved towards the first - third buffer 24 - 26 and are there placed next to one another. The plants can be simply pushed against one another, but there can optionally be paddles or other spacers to prevent the pot plants being pushed against one another.

In the interim, the carrier 16 (after an optional cleaning step) has been moved from auxiliary transfer station 32 to second transfer station 31. If it is detected that one of the buffer storages 24 - 26 has been filled, the second transfer robot 27 becomes active. This moves all plants from one of the buffer storages 24 - 26 to the carrier 16 in a single operation. Consequently, carrier 16 is filled exclusively with plants that have exclusively one of the desired characteristics, that is to say exclusively plants 11 or exclusively plants 12 or exclusively plants 13.

Starting from auxiliary transfer station 32, the same operation is carried out for a subsequent carrier 16. If the same buffer or another of the buffers 24 - 26 has been filled, this subsequent carrier 16 will be filled with this series of plants.

It will be understood that further carriers 16 that originally were not filled can optionally be fed to second transfer station 31 (especially when positioning further apart).

It will be understood that in connection with the water supply described above accurate positioning is desired when the pots are put back on carrier 16.

The plants can then be moved back to a cultivation location.

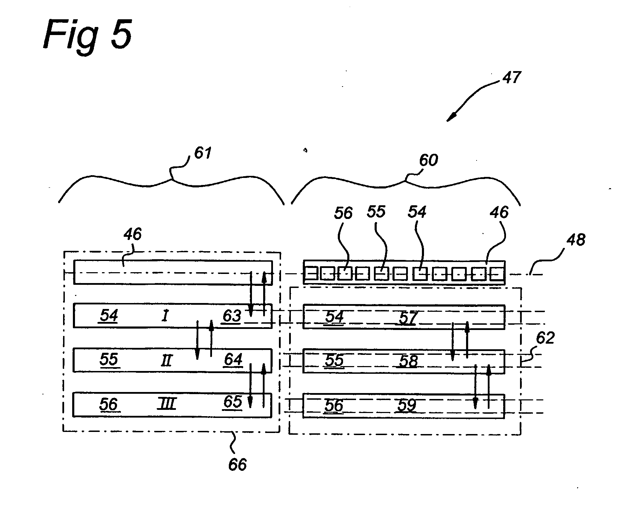

A further variant of the present invention where there is no auxiliary transfer station is shown in Fig. 5. That is to say, in the system 47 shown in this figure there is only a first transfer station 60 and a second transfer station 61. A series of plants consisting of the sorts 54, 55 and 56 is on the carrier 46. These are fed via conveyor 48. At the first transfer station 60 the complete series of plants is transferred from carrier 46 to intermediate storage 57 with the aid of the transfer robot 62. From there the selections for intermediate storage 58 and 59 are picked up at the same time and placed in the desired intermediate storage 58 or 59, respectively. Movement to buffer storages 63/65 then takes place in the manner described above with the aid of second transfer robot 66. Finally, the groups of plants are put back onto carrier 46 in the same way using second transfer robot 66.

Determination of the sort characteristics can take place either in any position along conveyor 48 or at the interface between conveyor 48 and first storage 52 or when first storage 57 is reached.

Although the invention has been described above with reference to a preferred embodiment, it will be understood that numerous other variants and applications are possible. Sorting is a phenomenon that occurs frequently in horticulture and by means of the present invention this sorting can be made appreciably more effective in combination with the movable plant carriers.

Although the invention has been described above with reference to a preferred embodiment, it will be understood that numerous other applications and variants are possible, such as, for example, a system with only one transfer station with transfer robot, plant movements in two opposing directions and a buffer station with multiple buffer storages.

## Claims

1. Method for sorting series of plants (11 - 13; 54 - 56) arranged on a carrier (16, 46), comprising placing said carrier in a first position (30; 60), from said first position transferring the complete series of plants from said carrier to a first intermediate storage (20; 57), determining at least one characteristic of said plants, transferring a first portion of said series of plants (12; 13; 55, 58, 56) that has said first characteristic to a second intermediate storage (21; 22; 58, 59), holding the remaining portion of said series of plants (11; 54) that does not have said characteristic in said first intermediate storage (20; 57), displacing said carrier into a second position (31; 61) and transferring a series of plants exclusively from said first or said second storage to said carrier in said second position.

2. Method according to Claim 1, wherein transfer of said series of plants from said carrier to the first intermediate storage comprises the transfer of said series of plants to an auxiliary storage (28) and the transport of all plants in said series from said auxiliary storage (28) to said first intermediate storage when said characteristic is determined.

3. Method according to one of the preceding claims, wherein said displacement of said carrier includes a cleaning step.

4. Method according to one of the preceding claims, wherein before transferring said plants from said first or second storage to said carrier said plants are fed to a first or second buffer, connected after said first or second intermediate storage.

5. Method according to one of the preceding claims, wherein said plants are pot plants.

6. Method according to one of the preceding claims, wherein the displacement of said plants from said carrier to the intermediate storage or the movement from said intermediate storage to said carrier comprises, successively, grasping said plants, lifting them, displacing them sideways, lowering them and setting them down on said carrier.

7. Method according to one of the preceding claims, wherein after said plants have been placed on an intermediate storage these are brought an equal distance apart from each other.

8. System (15, 47) for sorting a series of plants (11 - 13, 54 - 56) according to at least one characteristic, comprising a movable carrier (16, 46) for said plants, a first transfer station (30, 60) for displacing said series of plants simultaneously to a first intermediate storage (20, 57) with a first transfer robot (23, 62), a second intermediate storage (21, 22; 58; 54) at said first transfer station (30, 60) for supporting a selection of said plants, and a second transfer robot (27, 66) at a second transfer station (31, 61), adjoining the first transfer station, wherein said second transfer station has a first buffer (24, 63) and a second buffer (25, 64), wherein there are displacement means for moving plants from said first intermediate storage to said first buffer and for moving plants from said second intermediate storage to said second buffer, wherein said second transfer station has a second transfer robot (27, 66) for displacing a series of plants from a buffer to said carrier being displaced from a first position (30,60) to a second position (31; 61); wherein said transfer robots are designed for displacing said plants vertically.

9. System (15) according to Claim 8, comprising an auxiliary transfer station (32) upstream of said first transfer station having an auxiliary transfer robot (17) operating between said carrier (16) and an auxiliary storage (28), wherein movement means are present for displacing a series of plants between said auxiliary storage (28) and the first intermediate storage (20), wherein there are evaluation means (19) between said auxiliary storage (28) and first intermediate storage (20) for determining said characteristic.

10. System according to Claim 8, wherein there is a third intermediate storage (22, 59) and a third buffer (26; 65) and wherein said second transfer robot (27; 66) operates between said buffers.

## Patentansprüche

1. Verfahren zum Aussortieren einer Reihe von Pflanzen (11-13; 54-56), auf einem Träger (16; 46) angeordnet, umfassend das Anordnen des Trägers in einer ersten Position (30; 60), von dieser ersten Position aus das Transferieren der kompletten Reihe von Pflanzen von dem Träger zu einem ersten Zwischenspeicher (20; 57), das Feststellen wenigstens einer Eigenschaft der Pflanzen, das Transferieren eines ersten Teils der Reihe von Pflanzen (12; 13; 55, 58, 56), der die Eigenschaft besitzt, zu einem zweiten Zwischenspeicher (21; 22; 58, 59), das Belassen des verbleibenden Teils der Reihe von Pflanzen (11; 54), der die Eigenschaft nicht besitzt, in dem ersten Zwischenspeicher (20; 57), das Verschieben des Trägers in eine zweite Position (31; 61) und das Transferieren einer Reihe von Pflanzen ausschließlich von der ersten oder der zweiten Ablage zu dem Träger in der zweiten Position.

2. Verfahren nach Anspruch 1, bei dem das Transferieren der Reihe von Pflanzen von dem Träger zum ersten Zwischenspeicher das Transferieren der Reihe von Pflanzen zu einem Hilfsspeicher (28) und das Transportieren aller Pflanzen in dieser Reihe von dem Hilfsspeicher (28) zum ersten Zwischenspeicher, wenn die Eigenschaft festgestellt wurde, umfasst.

3. Verfahren nach einem der vorhergehenden Ansprüche, bei dem das Verschieben des Trägers einen Reinigungsschritt umfasst.

4. Verfahren nach einem der vorhergehenden Ansprüche, bei dem vor dem Transferieren der Pflanzen von dem ersten oder zweiten Speicher zu dem Träger die Pflanzen zu einem ersten oder zweiten Puffer, der sich dem ersten oder zweiten Zwischenspeicher anschließt, vorgeschoben werden.

5. Verfahren nach einem der vorhergehenden Ansprüche, bei dem die Pflanzen Topfpflanzen sind.

6. Verfahren nach einem der vorhergehenden Ansprüche, bei dem das Bewegen der Pflanzen von dem Träger zum Zwischenspeicher oder das Bewegen von dem Zwischenspeicher zu dem Träger nacheinander das Aufnehmen der Pflanzen, das Anheben dieser, das Verschieben dieser zur Seite, das Absenken dieser und das Absetzen dieser auf dem Träger umfasst.

7. Verfahren nach einem der vorhergehenden Ansprüche, bei dem, nach dem die Pflanzen an einem Zwischenspeicher angeordnet wurden, diese auf einen gleichen Abstand zueinander gebracht werden.

8. Anordnung (15, 47) zum Aussortieren einer Reihe von Pflanzen (11-13, 54-56) nach wenigstens einer Eigenschaft, aufweisend einen bewegbaren Träger (16, 46) für die Pflanzen, eine erste Transferierstation (30, 60) zum Bewegen der Reihe von Pflanzen gleichzeitig zu einem ersten Zwischenspeicher (20, 57) mittels eines ersten Transferierroboters (23, 62), einen zweiten Zwischenspeicher (21, 22; 58; 54) an der ersten Transferierstation (30, 60) zur Aufnahme einer Auswahl der Pflanzen, und einen zweiten Transferierroboter (27, 66) an einer zweiten Transferierstation (31, 61), die sich neben der ersten Transferierstation befindet, wobei die zweite Transferierstation einen ersten Puffer (24, 63) und einen zweiten Puffer (25, 64) umfasst, wobei Verschiebemittel vorgesehen sind, um Pflanzen von dem ersten Zwischenspeicher zu dem ersten Puffer zu bewegen und um Pflanzen von dem zweiten Zwischenspeicher zu dem zweiten Puffer zu bewegen, wobei die zweite Transferierstation einen zweiten Transferierroboter (27, 66) umfasst, um eine Reihe von Pflanzen von einem Puffer zu dem Träger zu bewegen, der von einer ersten Position (30, 60) in eine zweiten Position (31, 61) verschoben wurde, und wobei die Transferierroboter zum Bewegen der Pflanzen in vertikaler Richtung geeignet sind.

9. Anordnung (15) nach Anspruch 8, aufweisend eine Hilfs-Transferierstation (32) stromaufwärts der ersten Transferierstation mit einem Hilfs-Transferierroboter (17), der zwischen dem Träger (16) und einem Hilfsspeicher (28) agiert, wobei Bewegungsmittel vorhanden sind, um eine Reihe von Pflanzen zwischen dem Hilfsspeicher (28) und dem ersten Zwischenspeicher (20) zu bewegen, und wobei Evaluierungsmittel (19) zwischen dem Hilfsspeicher (28) und dem ersten Zwischenspeicher (20) vorgesehen sind, um die Eigenschaft festzustellen.

10. Anordnung nach Anspruch 8, bei der ein dritter Zwischenspeicher (22, 59) und ein dritter Puffer (26; 65) vorgesehen sind, und bei der der zweite Transferierroboter (27; 66) zwischen den Puffern agiert.

## Revendications

1. Procédé pour trier une série de plantes (11-13 ; 54-56) agencées sur un support (16, 46), comprenant la mise en place dudit support dans une première position (30 ; 60), depuis ladite première position le transfert de la série complète de plantes dudit support vers un premier lieu de stockage intermédiaire (20 ; 57), la détermination d'au moins une caractéristique desdites plantes, le transfert d'une première partie de ladite série de plantes (12 ; 13 ; 55, 58, 56) qui présente ladite première caractéristique vers un deuxième lieu de stockage intermédiaire (21 ; 22 ; 58, 59), la conservation de la partie restante de ladite série de plantes (11 ; 54) qui ne présente pas ladite caractéristique dans ledit premier lieu de stockage intermédiaire (20 ; 57), le déplacement dudit support dans une deuxième position (31 ; 61) et le transfert d'une série de plantes exclusivement dudit premier ou dudit deuxième lieu de stockage vers ledit support dans ladite deuxième position.

2. Procédé selon la revendication 1, dans lequel le transfert de ladite série de plantes dudit support vers le premier lieu de stockage intermédiaire comprend le transfert de ladite série de plantes vers un lieu de stockage auxiliaire (28) et le transport de toutes les plantes de ladite série dudit lieu de stockage auxiliaire (28) vers ledit premier lieu de stockage intermédiaire lorsque ladite caractéristique est déterminée.

3. Procédé selon l'une des revendications précédentes, dans lequel ledit déplacement dudit support comprend une étape de nettoyage.

4. Procédé selon l'une des revendications précédentes, dans lequel, avant le transfert desdites plantes dudit premier ou dudit deuxième lieu de stockage vers ledit support, lesdites plantes sont acheminées vers un premier ou un deuxième tampon, raccordé après ledit premier ou deuxième lieu de stockage intermédiaire.

5. Procédé selon l'une des revendications précédentes, dans lequel lesdites plantes sont des plantes en pot.

6. Procédé selon l'une des revendications précédentes, dans lequel le déplacement desdites plantes dudit support vers le lieu de stockage intermédiaire ou le mouvement dudit lieu de stockage intermédiaire vers ledit support comprend, successivement, le fait de saisir lesdites plantes, de les soulever, de les déplacer latéralement, de les abaisser et de les reposer sur ledit support.

7. Procédé selon l'une des revendications précédentes, dans lequel, après que lesdites plantes ont été placées sur un lieu de stockage intermédiaire, celles-ci sont espacées les unes des autres d'une distance égale.

8. Système (15, 47) pour trier une série de plantes (11-13, 54-56) selon au moins une caractéristique, comprenant un support mobile (16, 46) pour lesdites plantes, un premier poste de transfert (30, 60) pour déplacer ladite série de plantes simultanément vers un premier lieu de stockage intermédiaire (20, 57) avec un premier robot de transfert (23, 62), un deuxième lieu de stockage intermédiaire (21, 22 ; 58 ; 54) au niveau dudit premier poste de transfert (30, 60) pour supporter une sélection desdites plantes, et un deuxième robot de transfert (27, 66) au niveau d'un deuxième poste de transfert (31, 61), attenant au premier poste de transfert, dans lequel ledit deuxième poste de transfert comporte un premier tampon (24, 63) et un deuxième tampon (25, 64), dans lequel se trouve un moyen de déplacement pour déplacer les plantes dudit premier lieu de stockage intermédiaire vers ledit premier tampon et pour déplacer les plantes dudit deuxième lieu de stockage intermédiaire vers ledit deuxième tampon, dans lequel ledit deuxième poste de transfert possède un deuxième robot de transfert (27, 66) pour déplacer une série de plantes d'un tampon vers ledit support étant déplacé d'une première position (30 ; 60) vers une deuxième position (31 ; 61), où lesdits robots de transfert sont conçus pour déplacer lesdites plantes verticalement.

9. Système (15) selon la revendication 8, comprenant un poste de transfert auxiliaire (32) en amont dudit premier poste de transfert possédant un robot de transfert auxiliaire (17) fonctionnant entre ledit support (16) et un lieu de stockage auxiliaire (28), dans lequel le moyen de mouvement est présent pour déplacer une série de plantes entre ledit lieu de stockage auxiliaire (28) et le premier lieu de stockage intermédiaire (20), dans lequel se trouve un moyen d'évaluation (19) entre ledit lieu de stockage auxiliaire (28) et ledit premier lieu de stockage intermédiaire (20) pour déterminer ladite caractéristique.

10. Système selon la revendication 8, dans lequel se trouve un troisième lieu de stockage intermédiaire (22, 59) et un troisième tampon (26 ; 65), et dans lequel ledit deuxième robot de transfert (27 ; 66) fonctionne entre lesdits tampons.
